# EUROPEAN PATENT APPLICATION

(11) **EP 3 581 900 A1**
(43) Date of publication of application: **18.12.2019**
(21) Application number: 18178103.0
(22) Date of filing: 15.06.2018
(51) Int. Cl.: G01K 1/02, G01K 1/14

(54) **TEMPERATURE PROBE**

(71) Applicant: Whirlpool Corporation, Benton Harbor, MI 49022 (US)
(72) Inventor: Nava, Riccardo, 21024 Biandronno - Frazione Cassinetta (IT); Parachini, Davide, 21024 Biandronno - Frazione Cassinetta (IT); Pastore, Cristiano Vito, 21024 Biandronno - Frazione Cassinetta (IT)
(74) Representative: Spina, Alessandro

(57) **Abstract**

A temperature probe (10) having a temperature sensor assembly (18). The temperature sensor assembly (18) includes an elongate dielectric structural member (20), first and second temperature sensors (22) coupled with the dielectric structural member (20) and spaced from each other along an axis (16), and electronic circuitry (24) extending along a surface (28) of the dielectric structural member (20) and coupled with each of the first and second sensors (22). The electronic circuitry (24) defines first and second contact pads (50) connected with the first sensor (22).

## Description

### FIELD OF THE INVENTION

The present device generally relates to a temperature probe having a temperature sensor assembly carrying multiple sensors on a dielectric and electrically connected with circuitry carried on the dielectric.

### BACKGROUND

Temperature probes used to measure the internal temperature of food during cooking, including various forms of automated cooking using a controller in communication with the probe, often incorporate only a single temperature sensor. Such a sensor is directly connected by wires running through the probe for external connection with a coupling within or on the appliance. Some variations of probes may include additional sensors to provide a more accurate temperature profile of the food being cooked, potentially providing a more accurate or precise result. However, the incorporation of multiple sensors introduces additional wires to the assembly The addition of such wires can cause packaging issues within the probe itself because it may be desired to maintain a relatively small external diameter for the probe, and may add external bulk to a jacketed set of cables or may add additional separate cables.

### SUMMARY

In at least one aspect, a temperature sensor assembly is useable in a temperature probe. The assembly includes an elongate dielectric structural member, first and second temperature sensors coupled with the dielectric structural member and spaced from each other along a longitudinal axis thereof, and electronic circuitry extending along a surface of the dielectric structural member and coupled with each of the first and second sensors. The electronic circuitry defines first and second contact pads connected with at least the first sensor.

In at least another aspect, a temperature probe includes a thermally conductive probe body defining an interior cavity extending along an axis; and a sensor assembly received within the interior cavity. The sensor assembly includes an elongate dielectric structural member, first and second temperature sensors coupled with the dielectric structural member and spaced from each other along a longitudinal axis thereof, and electronic circuitry coupled with each of the first and second sensors and extending along the dielectric structural member.

In at least another aspect, a temperature sensor assembly is useable in a temperature probe. The assembly includes an elongate rigid dielectric substrate having a plurality of apertures formed therein, first and second temperature sensors coupled with the rigid dielectric substrate and spaced from each other along the axis, the first and second temperature sensors being embedded in the rigid substrate by being coupled within respective ones of the apertures, and a plurality of electrically conductive traces bonded with a surface of the rigid dielectric substrate and coupled with each of the first and second sensors, the traces defining first and second contact pads connected with at least the first sensor by the traces.

These and other features, advantages, and objects of the present device will be further understood and appreciated by those skilled in the art upon studying the following specification, claims, and appended drawings.

### BRIEF DESCRIPTION OF THE DRAWINGS

In the drawings:
FIG. 1 is a side cross-sectional schematic view of a temperature probe having a temperature sensor assembly;
FIG. 2 is a top cross-sectional schematic view of the temperature probe showing the temperature sensor assembly;
FIG. 3 is a front cross-sectional schematic view of the temperature probe showing the temperature sensor assembly;
FIG. 4 is a perspective view of a temperature probe connected with an oven;
FIG. 5 is a cross-sectional schematic view of the temperature probe inserted into a food item;
FIG. 6 is a perspective view of the temperature probe;
FIG. 7A is a cross-sectional detail view of a first mounting arrangement for a temperature sensor on a dielectric element with electronic circuitry;
FIG. 7B is a cross-sectional detail view of a second mounting arrangement for a temperature sensor on a dielectric element with electronic circuitry;
FIG. 8 is a side cross-sectional schematic view of a temperature probe having a temperature sensor assembly according to another aspect of the disclosure;
FIG. 9 is a top cross-sectional schematic view of the temperature probe showing the temperature sensor assembly;
FIG. 10 is a front cross-sectional schematic view of the temperature probe showing the temperature sensor assembly;
FIG. 11 is a cross-sectional detail view of a mounting arrangement for a temperature sensor on a dielectric element with electronic circuitry useable in the temperature sensor assembly; and
FIG. 12 is a cross-sectional detail view of a mounting arrangement for a temperature sensor within a dielectric element with lead frame electronic circuitry according to another aspect of the disclosure.

### DETAILED DESCRIPTION OF EMBODIMENTS

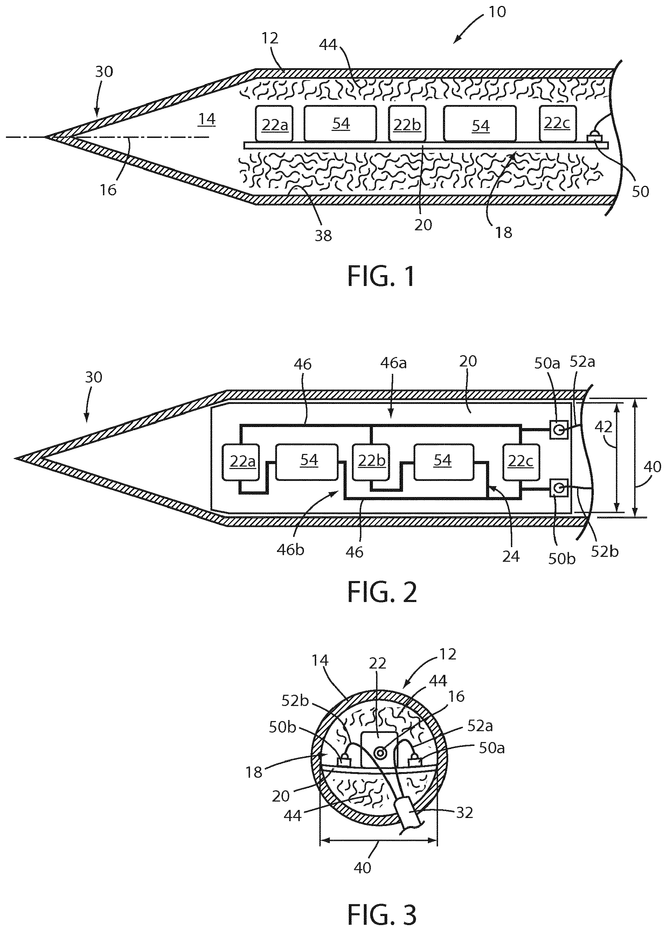

For purposes of description herein the terms "upper," "lower," "right," "left," "rear," "front," "vertical," "horizontal," and derivatives thereof shall relate to the device as oriented in FIG. 1. However, it is to be understood that the device may assume various alternative orientations and step sequences, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

Referring to the embodiment illustrated in FIGS. 1-3, reference numeral 10 generally designates a temperature probe. Temperature probe 10 includes a thermally conductive probe body 12 defining an interior cavity 14 extending along a longitudinal axis 16 and a sensor assembly 18 received within the interior cavity 14. The sensor assembly 18 includes an elongate dielectric structural member 20, at least a first and a second temperature sensors 22a,22b (which may be referred to collectively or in a genera manner as temperature sensors 22 or temperature sensor 22) coupled with the dielectric structural member 20 and spaced from each other along the axis 16, and electronic circuitry 24 coupled with each of the first and second sensors 22a,22b and extending along the dielectric structural member 20.

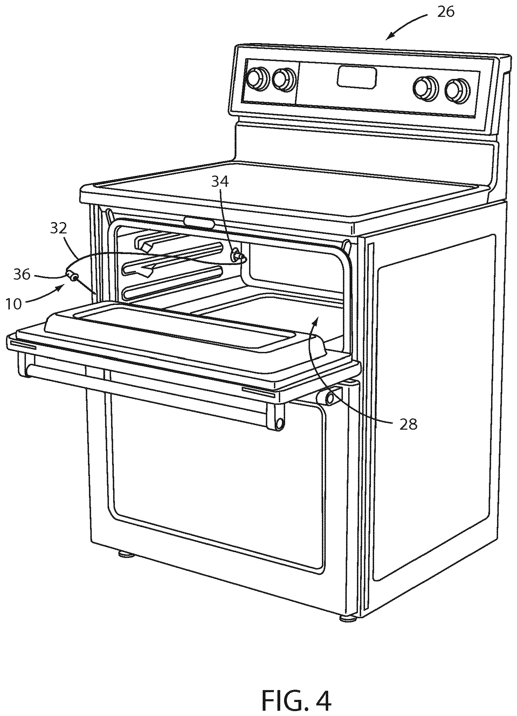

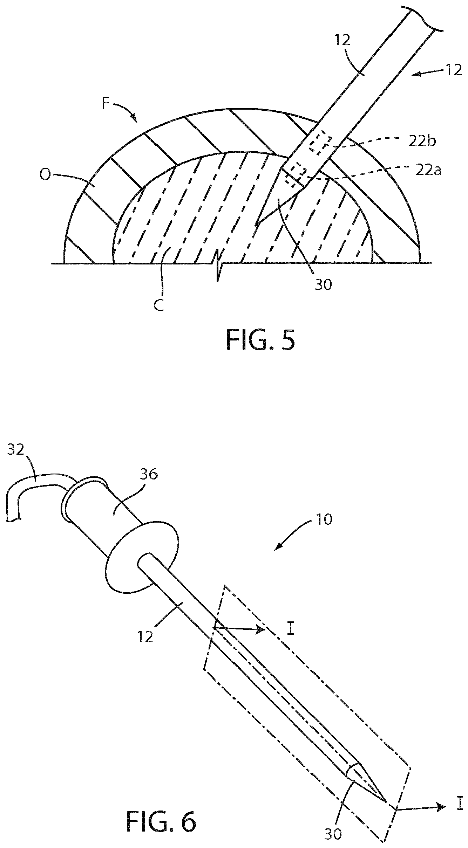

In an example, temperature probe 10 can be configured for use in connection with a cooking appliance, such as the oven 26 depicted in FIG. 4 or other cooking appliances, including but not limited to microwave ovens, toaster ovens, countertop convection ovens, grills, cooking hobs, and the like, as well as stand-alone thermometer units and systems. In this manner, temperature probe 10 can be configured to be used within interior 28 of oven 26 (or in other high heat environments associated with other cooking devices) in a manner similar to other known types of temperature probes. As such, temperature probe 10 can be generally configured to continuously measure the internal temperature of food being cooked within the interior 28 of oven 26, for example. As shown in FIG. 5, temperature probe 10 can, thusly, be configured for insertion into a food product, including by piercing generally firm food products, such as meat and the like by way of a pointed tip 30 on a distal end of body 12. Body 12 can, thusly be of a rigid, heat resistive material, such as various metals, including stainless steel, aluminum, or the like. The use of metal for body 12 further provides thermally-conductive properties for body 12 such that the heat from a food product F in which body 12 is inserted is transmitted to interior cavity 14 and thereby transmitted (by way of internal convection, conduction, or combinations thereof) to the temperature sensors 22. In this manner, other rigid thermally conductive materials, such as glass, ceramic, or the like can be used for body 12.

With further reference to FIG. 5, the first and second temperature sensors 22a,22b are included in interior cavity 14 in the above-described spaced apart manner to be able to detect the temperature of the associated food product F at different depths thereof to facilitate improved temperature detection and/or determination by the associated oven 26 (or other appliance or device). In particular, the temperature of the food product F toward the core C thereof will typically rise more slowly during cooking than the outer portions O thereof. In many cooking applications for a wide variety of food products F, the temperature of the food core C indicates cooking state and is the significant temperature to determine when cooking has finished. In this manner, in a temperature probe with only a single sensor, improper positioning of the associated body within the food product can result in the associated temperature sensor being positioned within the outer portion O rather than the core C (either by inserting the body too far or not far enough into the food product F), resulting in poor reliability of the temperature reading. Further, similar principles can cause readings from single sensor temperature probes to fluctuate with repositioning of the associated body within the food product F, resulting in lowered confidence in whatever reading is provided.

Accordingly, by providing the first and second, spaced apart temperature sensors 22a,22b, as well as one or more possible further sensors like the sensor 22c shown in the drawings, the present temperature probe 10 can output readings of the multiple sensors that can both be read by oven 26 or the like according to various schemes including averaging the outputs from all sensors 22a,22b,22c reading only the lower value of the outputs from any sensor 22a,22b, or 22c or other schemes determined to provide a desired level of reliability (which may vary with the particular food product F, cooking method, or the like). In some implementations, temperature probe 10 can be configured to make such determinations and calculations internally prior to output, as discussed further below. Similar principles can be applied with similar probes having more (e.g., four or more) sensors or only two sensors.

Further, the above-described coupling (or mounting) of temperature sensors 22 on the elongate dielectric structural member 20 and electrical coupling (or connection) of temperature sensors 22 with the electronic circuitry 24 that extends along the dielectric structural member 20 can provide for both reliable positioning of sensors 22 within body 12, as described further below, as well as reliable spacing of the sensors 22 with respect to each other, which can help ensure that the above-described benefits of such spacing are maintained, and to help improve the accuracy of any determinations or calculations of a single readout temperature based on signals from sensors 22 that account for such spacing, for example. Further, the use of the electronic circuitry 24 on dielectric structural member 20 allows for easer internal and external connection between and to sensors 22a,22b,22c as discussed further below, and more compact packaging of the sensor assembly 18 within interior cavity 14, as well as allowing for the incorporation of additional temperature sensors 22 in further spaced apart manners according to the general principles discussed herein with respect to first and second temperature sensors 22a,22b, as well as the third temperature sensor 22c depicted in FIGS. 1 and 2 .

Returning to FIG. 4, and with further reference to FIG. 6, temperature probe 10 may also include a cable 32 extending from body 12 to a coupling 34 within interior 28 of oven 26, for example, to allow for use of probe 10 with food F within interior 28. Cable 32 may further extend through a housing 36 receiving body 12 on an end thereof opposite tip 30 such that housing 36 can provide a grip for a user to insert and/or remove body 12 from the food product F or otherwise handle temperature probe 10. Housing 36 can also be made from a sufficiently heat-resistive material, including metal, various plastics, ceramic, silicon elastomer, or the like.

As shown in FIGS. 1-3, dielectric structural member 20 is arranged to maintain a position of sensors 22 within interior cavity 14 such that sensors 22 are spaced away from the inner wall 38 of body 12 that defines interior cavity 14. In this manner, interior cavity 14 defines a diameter 40 perpendicular to the longitudinal axis 16 (as shown in FIG. 3). Dielectric structural member 20 is, thusly, sized to correspond with the diameter 40 to suspend the sensors 22 within the interior cavity 14 away from inner wall 38, including by the width 42 of dielectric structural member 20 being approximately the same as diameter 40. In this manner, contact between dielectric structural member 20 and inner wall 38 at least helps to maintain the desired positioning of sensors 22, with the width 42 of dielectric structural member 20 preventing sensors 22 from moving into contact with inner wall 28 by way of interference between dielectric structural member 20 and inner wall 28 by way of the circular geometry of inner wall 28.

Additional features or configuration can contribute to the desired positioning of sensors 22. In one aspect, the particular construction of dielectric structural member 20 can influence the desired configuration thereof. In the embodiment of FIGS. 1-3, dielectric structural member 20 is shown as a strip of flex-circuit material, which may be a relatively thin (including in the range of 12 µm to 800 µm) dielectric material that is flexible. In one aspect, the low thickness of the flex circuit strip 20 can help to effectively package sensor assembly 18 within interior cavity 14 of a body 12 sized similarly to that of a typical temperature probe. In another aspect, the flexibility of flex circuit strip 20 can allow for the width 42 thereof to be slightly oversized with respect to diameter 40 so that an interference fit between flex circuit strip 20 and inner wall 38 can be achieved. In this manner, the outer edges of flex circuit strip 20 can be positioned along the diameter of inner wall 38 with the more central portions thereof (i.e. close to axis 16) bowing downward slightly to accommodate the thickness of sensors 22.

Such a flex circuit strip 20 can be of numerous materials including, but not limited to, polyester ("PET"), polyimide ("PI"), polyethylene naphthalate ("PEN"), polyetherimide ("PEI"), along with various fluropolymers ("FEP") and copolymers of a thickness generally within the above-described range to achieve the desired flexibility given the particular material characteristics. Although generally thin and flexible, the flex circuit strip 20 can adequately maintain the desired spacing of first and second sensors 22a and 22b, as well as a third sensor 22c, along axis 16, particularly when flexed in the direction of diameter 40. The positioning of sensor assembly 18 along axis 16 can be maintained by the interference provided by such flexing, by the shape of flex circuit strip 20, or by other means discussed further below. In general, first sensor 22a may be positioned just past tip 30 with second sensor 22b positioned between about 4 mm and 30 mm therefrom. As shown in FIGS. 1 and 2, third sensor 22c can also be included and positioned an additional 4 mm to 30 mm from second sensor 22b. In a particular embodiment, multiple sensors 22 can be evenly distributed over a desired longitudinal area of body 12.

As shown in FIG. 3, one or more masses of thermally conductive, electrically insulating filler material 44 can be received within the interior cavity 14 and surrounding at least a portion of the sensor assembly 18. In particular, one such mass 44 can be positioned between the exposed portions of sensors 22 (i.e. opposite dielectric structural element 20). The use of such filler material 44 can further help maintain sensors 22 away from inner wall 38 and provide interference to maintain the desired positioning of sensor assembly 18 along axis 16, while also potentially improving the speed and/or accuracy of the reading produced by sensors 22. Such thermally conductive material masses 44 can be a fiber woven material (of glass or the like), a ground glass or ceramic infill, or an unwoven fiber material of glass or the like. Still further, the mass of thermally conductive, electrically insulating filler material 44 can be of a thermally conductive, liquid adhesive (i.e. that is dispensed in a liquid state but cures solid, in some instances while remaining flexible) material. Examples of such materials include Liqui-Bond EA 1805 Thermally Conductive, Two-Part, Liquid Epoxy Adhesive; Liqui-Bond SA 1000 (One-Part) Thermally Conductive, One-Part, Liquid Silicone Adhesive; Liqui-Bond SA 1800 (One-Part) Thermally Conductive, One-Part, Liquid Silicone Adhesive; Liqui-Bond SA 2000 (One-Part) Thermally Conductive, One-Part, Liquid Silicone Adhesive; Liqui-Bond SA 3505 Thermally Conductive, Two-Part, Liquid Silicone Adhesive; Loctite Isostrate®; Loctite Powerstrate Xtreme; Loctite Silverstrate®; and Loctite Thermstrate®, all of which are available from Henkel Corporation of Düsseldorf, Germany.

Continuing with respect to FIGS. 1-3, the electronic circuitry 24 is defined by a plurality of electrically conductive traces 46 bonded with a surface 48 of the dielectric structural member 20. Traces 46 may be formed from an etched metal layer applied over dielectric structural member 20 to achieve a desired pattern and/or routing of the traces 46 to be connectable with sensors 22. In particular, traces 46 are arranged to provide pairs of connections with each of the sensors (e.g., positive and negative, input and output, hot and neutral, depending on the particular terminology employed). The use of traces 46 replaces the user of individual pairs of wires or leads typically used to connect with the one or more sensors within known temperature probes, thereby allowing for a more compact multi-sensor arrangement, easier packaging, and potentially more reliable connections from sensors 22 to the oven 26 (or other appliance or device). In the present arrangement, wherein dielectric structural element 20 is a flex circuit strip, the traces 46 can be formed from a thin foil layer initially laminated to the flex circuit strip by adhesive or the like. In other aspects, the conductive layer can be deposited by spin coating, sputtering, physical vapor deposition, or the like. Etching can be carried out using lasers or other resistive (chemical or photolithographic, e.g.) processes.

As shown, the electronic circuitry 24 can further include a plurality of contact pads 50 bonded with surface 48 and generally integral with traces 46. In an example, the number of contact pads 50 can be equal to the number of sensors 22 with each sensor 22 connected with a corresponding set of contact pads 50 by the remaining electronic circuitry 24. In another example, as depicted in the figures, the electronic circuitry 24 may include only first and second contact pads 50a and 50b. In this manner, contact pads 50a,50b can be formed from the same initial conductive layer in the same etching step and can, therefore, be defined with traces. Essentially, contact pads 50a,50b provide enlarged areas for connection of respective wires 52a,52b with sensor assembly 18 (including of sufficient area to bond wires 52a,52b with the electronic circuitry 24 using solder masses or the like. In this manner, the traces 46 can be configured to electrically connect each of the sensors 22 between each of the set of wires 52a,52b. In this manner one wire 52a can be an input wire providing a steady current and/or voltage to the inputs of the sensors 22 by way of contact pad 50a on an input side 46a of the trace 46 pattern. Similarly, an output side 46b of the traces 6 can connect the outputs of the sensors 22 with contact pad 50b to which a signal or readout wire 52b is bonded. Such an arrangement can provide power to all of the sensors (22a,22b,22c, for example) in sensor assembly 18 by way of a single wire 52a and can communicate the output of all sensors (22a,22b,22c, for example) to the oven or other device by a single readout wire 52b. In the above-described example wherein electronic circuitry 24 includes sets of contact pads 50 equal to the number of sensors 22, the probe 10 will include a corresponding number of wires in pairs respectively connected with the pairs of contact pads 50.

As shown, the first and second wires 52a,52b, thusly respectively coupled with the first and second contact pads 50a,50b can extend through the interior cavity 14 and out of the body 12, including through cable 32, which as discussed above couples with the control board of oven 26 or the like. Accordingly, the wires 52a,52b alone can place all of the sensors 22 in electronic communication with the oven 26 or other device. As discussed herein, electronic communication means that wires 52a,52b carry current and/or signals from the sensors 22 to the oven 26 or other connected device. In another example, temperature probe 10 can include electronic circuitry to facilitate wireless communication between sensors 22 and the associated oven 26 or other device (including, Bluetooth, ZigBee, or the like). Such circuitry can be included in housing 36, for example (along with any necessary power source) and connected with sensor assembly 18 by way of wires 52a,52b.

As further shown in FIGS. 1 and 2, sensor assembly 18 may include additional or supplemental electronic components 54 that relate to the function of sensors 22 and/or the signal output therefrom. In various examples, such supplemental electronic components 54 can include various resistors, capacitors, transistors, diodes, or the like and/or subassemblies thereof to provide desired signal processing, filtering or the like, and/or to effect desired transmission of the signals from all sensors 22 simultaneously through the output side 46b of traces 46 and through wire 52b. In a similar manner to sensors 22, discussed above and additionally below, components 54 can be electrically connected with traces 46, which can be routed or patterned to provide the desired connection of such components 54 with or between sensors 22 and/or contact pads 50a,50b, including in the depicted arrangement, wherein the components 58 are connected in-line with particular traces 46 on the output side 46b thereof.

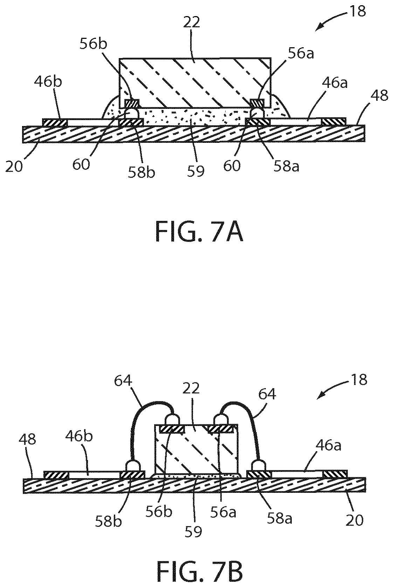

The electrical connection between traces 46 and the individual sensors 22 and components 54 can be achieved according to various known arrangements, as shown in the examples of FIGS. 7A and 7B. In particular, in the arrangement shown in FIG. 7A, sensors 22 are inverted such that the terminals 56a (input) and 56b (output) face the dielectric structural member 20 and, more particularly traces 46, including lands 58a,58b integral with traces 46 and positioned for connection with terminals 56a,56b, respectively. In this manner, solder bonds 60 can directly connect terminals 56a,56b with the aligned lands 58a,58b, respectively. Optionally, additional structural coupling between sensors 22 and dielectric structural element 20 can be made by way of an encapsulation or bonding layer 59 between sensors 22 and the underlying portion of dielectric structural element 20 and surrounding solder bonds 60. Components 54 can be similarly connected with traces 46.

In the alternative arrangement shown in FIG. 7B, sensors 22 are mounted "face up" by an adhesive or bonding layer 59 to dielectric structural element 20. Terminals 56a,56b are then connected with the corresponding lands 58a,58b using wire bonds 64 or other wire leads. Components 54 can be similarly connected or various uses of both arrangements can be implemented. Various other forms of sensors 22 can be bonded with integral leads, for example, directly to lands 58a,58b by way of solder or the like with such bonds supporting sensor with respect to dielectric structural element 20, including in a spaced apart manner therefrom. In various examples, sensors 22 can be in the form of thermistors, thermocouples, resistance thermometers, silicon bandgap temperature sensors, or the like, with particular bonding methods, including those known but not specifically discussed herein, being used for mounting and connection with dielectric structural element 20 and traces 46.

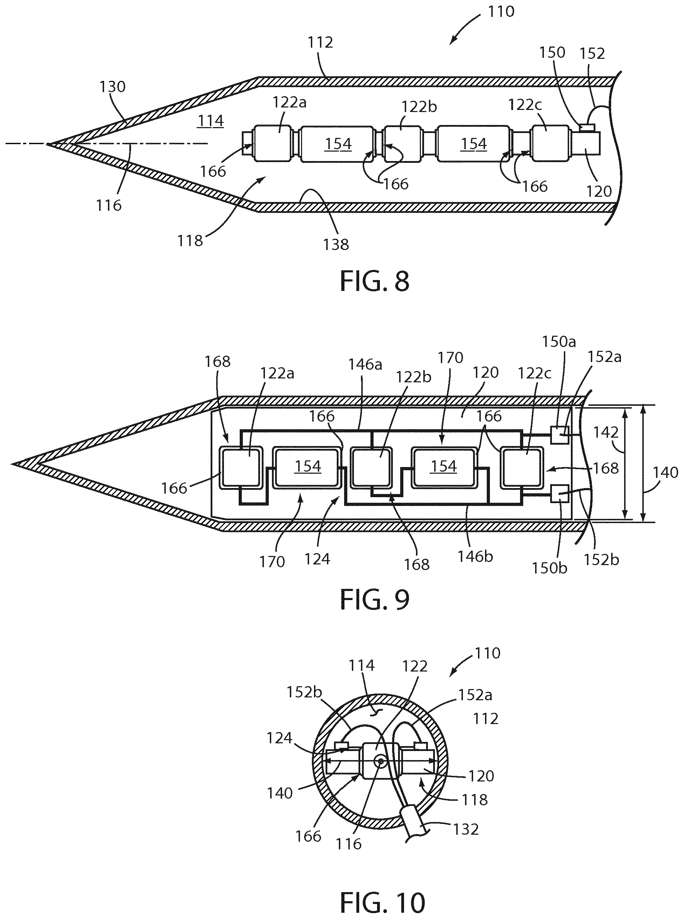

Turning to FIGS. 8-11, an additional embodiment is shown in which the temperature probe 110 includes a sensor assembly 118 with a rigid dielectric substrate for the dielectric structural member 120. As with other printed circuit board ("PCB") applications, rigid dielectric structural element 120 can be of a number of dielectric materials, including phenolic paper (FR-2), woven fiberglass cloth with epoxy resin (FR-4), insulated metal substrate ("IMS") or the like. Temperature probe 110 is otherwise constructed similarly to and using the same principles as temperature probe 10, as discussed above, and any portions or components not specifically discussed are similar to what is shown above. In this respect, like reference numerals are used to indicate similar components.

As shown, to provide the desired spacing of sensors 122 from inner wall 138 of body 112, given the generally increased thickness of the rigid dielectric structural element 120 compared to the flex circuit strip 20 discussed above, sensors 122 and components 154 can be positioned in apertures 166 in dielectric structural element 120. As such the apertures 166 can correspond with desired locations 168 and 170 for sensors 122 and components 154, respectively. As shown in FIG. 10, such positioning can allow for dielectric structural element 120 to have a width 142 generally equal to diameter 140 (with allowances for tolerance and stackups to ensure reliable assembly of sensor assembly 118 within body 112) such that dielectric structural element 120 is positioned in a generally aligned position with respect to axis 116. Sensors 22 are thusly positioned generally along a midplane of dielectric structural element 120 by being supported within respective apertures 166 to be similarly aligned with axis 116.

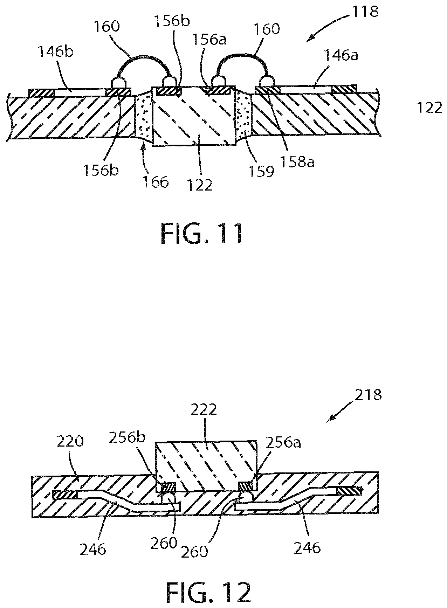

As shown in greater detail in FIG. 11, in one example, sensors 122 can be coupled to dielectric structural element 120 within apertures 166 using a bonding or encapsulant layer 159 (such as of an epoxy resin or the like) with terminals 156a,156b exposed on the same side of dielectric structural element 120 as lands 158a,158b. Wire bonds 164 or other leads can connect terminals 156a,156b with lands 158a,158b, which provide the electrical connection between sensors 122 and traces 146, which can be otherwise arranged and formed in a manner similar to that which is described above with respect to FIGS. 1-3. In further examples, sensors 122 may have leads integrally extending therefrom such that they can be directly bonded with lands 158a,158b and may be sufficient to support sensors 122 within apertures 166. Any additional components 154 can be coupled and connected with the desired structures in a similar manner and according to the principles discussed above.

In a further embodiment, shown in FIG. 12, the electronic circuitry 224 of sensor element 218 useable in connection with a temperature probe 10 similar to that which is shown in FIGS. 4-6 and otherwise according to the principles and configuration discussed above, can be in the form of a lead frame structure. In such an arrangement a plurality of leads 246 substitute traces and provide the electrical connection to and among sensors 222 and components, as well as at least partial support for sensors 222 and components. As shown, leads 246 can extend to aligned positions with terminals 256 of sensors 222 (and of other components) for bonding therewith using solder masses 260. During fabrication, leads 246 can be supported on a frame member such that leads 246 can similarly support sensors 222. After bonding, an encapsulant layer 220 can be formed around leads 246 and around at least a portion of sensors 222 for coupling therewith, with the frame being subsequently removed. As such, encapsulant 220 can form the dielectric supporting member and can be sized (such as by molding or post-processing including grinding or the like) to fit within the interior cavity of the associated temperature probe body in a similar manner to that which is discussed above with respect to FIGS. 8-10.

It will be understood by one having ordinary skill in the art that construction of the described device and other components is not limited to any specific material. Other exemplary embodiments of the device disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the device as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments without departing from the spirit of the present innovations.

It will be understood that any described processes or steps within described processes may be combined with other disclosed processes or steps to form structures within the scope of the present device. The exemplary structures and processes disclosed herein are for illustrative purposes and are not to be construed as limiting.

It is also to be understood that variations and modifications can be made on the aforementioned structures and methods without departing from the concepts of the present device, and further it is to be understood that such concepts are intended to be covered by the following claims unless these claims by their language expressly state otherwise.

The above description is considered that of the illustrated embodiments only. Modifications of the device will occur to those skilled in the art and to those who make or use the device. Therefore, it is understood that the embodiments shown in the drawings and described above is merely for illustrative purposes and not intended to limit the scope of the device, which is defined by the following claims as interpreted according to the principles of patent law, including the Doctrine of Equivalents.

## Claims

1. A temperature probe (10), comprising:
a thermally conductive probe (10) body (12) defining an interior cavity (14) extending along a longitudinal axis (16); and
a temperature sensor assembly (18) received within said interior cavity (14),
wherein said temperature sensor assembly (18) comprises:
• an elongate dielectric structural member (20);
• at least a first temperature sensor and a second temperature sensor (22, 22a, 22b) that are coupled with said dielectric structural member (20) and spaced from each other along it; and
• electronic circuitry (24) extending along a surface (48) of the dielectric structural member (20) and coupled with each of the first and second sensors (22), the electronic circuitry (24) defining first and second contact pads (50, 50a, 50b) connected with at least the first sensor (22a).

2. The temperature probe (10) of claim 1, wherein the dielectric structural member (20) is a flex circuit strip.

3. The temperature probe (10) of claim 1 or claim 2, wherein the sensors (22) are directly bonded to and electrically connected with the electronic circuitry (24).

4. The temperature probe (10) of claim 1, wherein the temperature sensors (22) are bonded with the dielectric structural member (20) and are electrically connected with the electronic circuitry (24) by respective pairs of leads (58).

5. The temperature probe (10) of claim 1, wherein:
the dielectric structural member (20) is a rigid substrate having a plurality of apertures (66) formed therein, the apertures (66) defining respective locations (68) for the first and second temperature sensors (22); and
the first and second temperature sensors (22) are embedded in the rigid substrate by being coupled within respective ones of the apertures (66).

6. The temperature probe (10) of claim 1, wherein:
the electronic circuitry (24) is a lead frame structure, the first and second temperature sensors (22) being directly bonded with the lead frame structure; and
the elongate dielectric structural member (20) includes an encapsulant layer surrounding at least portions of the first and second temperature sensors (22) and at least portions of the lead frame structure.

7. The temperature probe (10) of claim 1, further including a first supplemental electronic component (54) coupled with the dielectric structural member (20), the electronic circuitry (24) being further coupled with the first supplemental electronic component (54).

8. The temperature probe (10) of claim 1, wherein the electronic circuitry (24) is defined by a plurality of electrically conductive traces (46) bonded with a surface (48) of the dielectric structural member (20), the traces (46) defining first and second contact pads (50) that are electrically connected with at least the first sensor (22) by the traces (46).

9. The temperature probe (10) of claim 8, further including first and second wires (52) respectively coupled with the first and second contact pads (50), the first and second wires (52) extending through the interior cavity (14) and out of the body (12).

10. The temperature probe (10) of claim 9, wherein the first and second wires (52) are in electronic communication with both the first temperature sensor and the second temperature sensor.

11. The temperature probe (10) of claim 1, further comprising a mass of conductive, electrically insulating filler material (44) received within the interior cavity (14) and surrounding at least a portion of the sensor assembly (18).

12. The temperature probe (10) of claim 1, wherein;
the interior defines a diameter (40) perpendicular to the axis (16); and
the dielectric structural member (20) is sized to correspond with the diameter (40) to suspend the first and second sensors (22) within the interior cavity (14) away from an inner wall (38) of the body (12).
